# EUROPÄISCHE PATENTSCHRIFT

(11) **EP 4 105 358 B1**
(45) Veröffentlichungstag und Bekanntmachung des Hinweises auf die Patenterteilung: **30.04.2025**
(21) Anmeldenummer: 21179398.9
(22) Anmeldetag: 15.06.2021
(51) Int. Cl.: C25B 1/04, C25B 9/75, C25B 9/77, C25B 15/08

(54) **ELEKTROLYSEZELLE UND ELEKTROLYSEEINHEIT ZUM ELEKTROCHEMISCHEN ZERLEGEN VON WASSER**
ELECTROLYTIC CELL AND ELECTROLYSIS UNIT FOR ELECTROCHEMICAL DECOMPOSITION OF WATER
CELLULE D'ÉLECTROLYSE ET UNITÉ D'ÉLECTROLYSE POUR LA DÉCOMPOSITION ÉLECTROCHIMIQUE DE L'EAU

(43) Veröffentlichungstag der Anmeldung: 21.12.2022
(73) Patentinhaber: Siemens Energy Global GmbH & Co. KG, 81739 München (DE)
(72) Erfinder: Schöpplein, Christopher, 96114 Hirschaid (DE); Wolf, Erik, 91341 Röttenbach (DE)

(56) Entgegenhaltungen:
- US-A1- 2007 215 492
- US-A1- 2009 229 990
- US-A1- 2013 140 171

## Beschreibung

Die Erfindung betrifft eine Elektrolysezelle zur mehrfachen Verwendung in einer Elektrolyseeinheit.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserelektrolyse.

Aktuelle Überlegungen gehen dahin, mit überschüssiger Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher mit Wasserelektrolyseuren erzeugt wird. Mittels des Wasserstoffs kann beispielsweise sogenanntes EE-Gas hergestellt werden.

Ein Elektrolyseur weist in der Regel eine Mehrzahl an Elektrolysezellen auf, welche benachbart zueinander angeordnet sind. Mittels der Wasserelektrolyse wird in den Elektrolysezellen Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Das Wasser wird dabei von einer Unterseite in den Anodenraum und/oder Kathodenraum gefördert.

Das entstehende Gas, d.h. der Sauerstoff auf der Anodenseite und der Wasserstoff auf der Kathodenseite, wird auf der Oberseite der jeweiligen Elektrolysezelle abgeführt. Einerseits aufgrund des Gasstroms wird zwangsläufig ein Teil Wasser mitgeführt. Anderseits ist in der Regel eine Kühlung der Elektrolysezelle erforderlich, so dass ein Wasserumlauf auf beiden Seiten gewünscht ist. Insofern verlassen nicht nur die gewünschten Gase Wasserstoff und Sauerstoff die Elektrolysezelle auf dessen Oberseite, sondern auch Wasser.

Im Folgenden ist daher eine Gasabscheidung notwendig. Hierbei ist es üblich, dass über eine Verrohrung die mehren Elektrolysezellen und weiterhin mehrere Elektrolyseeinheiten miteinander verbunden werden und das jeweils austretende Gas-Wasser-Gemisch einem zentralen Gasabscheider zugeführt wird. Eine hierzu vorteilhafte Ausführung ist beispielsweise aus der WO 2020/020611 A1 bekannt.

Wenngleich sich die Gesamtanlage mit den mehreren Elektrolyseeinheiten und dem Gasabscheider als vorteilhaft hinsichtlich Aufbaus und Wirtschaftlichkeit darstellen, so ist ein Nachteil jedoch die geringe Flexibilität hinsichtlich der Anpassung einer entsprechenden Gesamtanlage an unterschiedliche zur Verfügung stehenden Leistungen.

Demgegenüber offenbaren die Druckschriften US2007/215492A1 (offenbarend den Oberbegriff des Anspruchs 1),

US2009/22990A1 und US2013/140171A1 Elektrolyseeinheiten, welche aus einer Mehrzahl Elektrolysezellen aufgebaut sind, wobei die Elektrolysezellen jeweils oberhalb der Kathodenkammer und der Anodenkammer quer verlaufende Gasabscheidekammern aufweisen. Eine vergrößerte Form dieser integrierten Gasabscheidekammern ermöglicht dabei bereits in der Elektrolyseeinheit eine Gasabscheidung.

Wenngleich eine hohe Flexibilität für den Aufbau von Elektrolyseeinheiten gegeben ist, so ist eine Verbesserung in der Abscheidung der Gase notwendig. Aufgabe ist es daher, die Gasabscheidung zu verbessern.

Die gestellte Aufgabe wird durch eine erfindungsgemäße Elektrolysezelle entsprechend Anspruch 1 gelöst. Eine erfindungsgemäße Elektrolyseeinheit ist im Anspruch 7 angegeben. Vorteilhafte Ausführungsformen sind Gegenstand des Unteranspruchs.

Die Elektrolysezelle wird bestimmungsgemäß zur Bildung einer Elektrolyseeinheit verwendet. Dabei dient die Elektrolyseeinheit zum elektrochemischen Zerlegen von Wasser zu Wasserstoff und Sauerstoff, der sogenannten Wasserelektrolyse. Die Elektrolysezelle besitzt eine an Anodenseite sowie eine gegenüberliegende Kathodenseite. Weiterhin weist die Elektrolysezelle ein Gehäuse auf, in dem ein Raum für den Prozess der Elektrolyse zur Verfügung gestellt wird. Dabei wird der Raum durch eine Membran in zwei Hälften geteilt, wobei sich auf der Anodenseite die Anodenkammer und auf der Kathodenseite die Kathodenkammer befindet. In der Anodenkammer befindet sich dabei eine Anode und gegenüberliegend in der Kathodenkammer entsprechend eine Kathode. Für den Prozess der Wasserelektrolyse ist es dabei erforderlich, dass zwischen der Anode und der Katode eine elektrische Spannung angelegt wird.

In der Regel wird als Membran eine sogenannte Polymer-Elektrolyt-Membran (PEM, eng. "polymer electrolyte membrane") eingesetzt. Die Verwendung und dessen Eigenschaften sind dem Fachmann hinlänglich bekannt, so dass es einer diesbezüglichen Erklärung nicht bedarf. Alternativ kann aber auch vorgesehen sein, dass es sich um eine sogenannte Anionen-Austauscher-Membran (AEM, eng. "anion exchange membrane") handelt (gleichfalls hinlänglich aus dem Stand der Technik bekannt).

Zur Ermöglichung des Prozesses der Zerlegung von Wasser ist entsprechend an der Unterseite der Anodenkammer und/oder an der Unterseite der Kathodenkammer ein Wassereinlass erforderlich. Der in der Anodenkammer im Prozess entstehende Sauerstoff mit dem im Umlauf strömenden Wasser wird durch einen an der Oberseite der Anodenkammer angeordneten Sauerstoffauslass abgeführt. Analog befindet sich auf der Oberseite der Kathodenkammer ein Wasserstoffauslass zur Ermöglichung der Abfuhr des gebildeten Wasserstoffs gleichfalls mit dem mitströmenden Wasser.

Um nunmehr eine hohe Flexibilität hinsichtlich der Auslegung der Elektrolyseeinheit in Anpassung an unterschiedliche Leistungen zu ermöglichen, ist entgegen dem üblichen Verfahren vorgesehen, dass die Gasabscheidung (Phasentrennung flüssig/gasförmig) bereits an der Elektrolysezelle ermöglicht wird. Hierzu weist die Elektrolysezelle innerhalb des Gehäuses oberhalb des Sauerstoffauslasses eine Sauerstoffkammer und oberhalb des Wasserstoffauslasses eine Wasserstoffkammer auf. Dabei ist es erforderlich, dass das Volumen der Sauerstoffkammer zumindest dem 0,15-fachen Volumen der Anodenkammer und das Volumen der Wasserstoffkammer zumindest dem 0,15-fachem Volumen der Kathodenkammer entspricht.

Besonders vorteilhaft ist es hierbei, wenn das Volumen der Sauerstoffkammer zumindest dem 0,25-fachen Volumen der Anodenkammer und/oder wenn das Volumen der Wasserstoffkammer zumindest dem 0,25-fachem Volumen der Kathodenkammer entspricht.

Weiterhin ist es vorteilhaft, wenn das Volumen der Wasserstoffkammer größer gewählt wird als das Volumen der Sauerstoffkammer. Hier ist es besonders vorteilhaft, wenn das Volumen der Wasserstoffkammer zumindest dem 1,25-fachen und/oder maximal dem 2-fachen des Volumens der Sauerstoffkammer entspricht.

Bei der Auslegung der Größe der Sauerstoffkammer und der Wasserstoffkammer kann vorteilhaft auch berücksichtigt werden, wie hoch der Betriebsdruck in den Kammern ist. Dabei ist es vorteilhaft ein größeres Volumen für die Sauerstoffkammer respektive die Wasserstoffkammer bei geringeren Drücken vorzusehen.

Die Bereitstellung einer Sauerstoffkammer sowie einer Wasserstoffkammer mit einem hinreichenden Volumen ermöglicht bereits am Ort der Entstehung eine Gasabscheidung (Phasentrennung flüssig/gasförmig), so dass die bisher erforderlichen je nach Anlage individuell angepassten Gasabscheider entbehrlich werden. Allenfalls kann es vorteilhaft sein, zu der Anlage im Wasserumlauf einen standardisierten kleinen Gasabscheider zur Ausleitung eines möglicherweise verbleibenden geringen Restanteils des Gases im Wasser bzw. des Wassers im Gas zu ermöglichen.

Durch die Ausführung kann die Elektrolyseeinheit an individuelle Leistungsbedürfnisse flexibel angepasst werden. Dabei bedarf es lediglich der Wahl der erforderlichen Anzahl an Elektrolysezellen.

Dabei ist es vorteilhaft, wenn das Gehäuse der Elektrolysezelle einteilig ausgeführt wird, sodass möglichst wenig Montageprozesse zum Zusammenbau der Elektrolysezelle notwendig sind. Besonders vorteilhaft wird hierbei das Gehäuse einstückig beispielsweise als Gussteil hergestellt.

Dabei ist es besonders vorteilhaft, wenn das Gehäuse der Elektrolysezelle aus einem Kunststoffmaterial besteht. Somit kann beispielsweise das Gehäuse der Elektrolysezelle mit einem einzigen Spritzgussprozess vollständig hergestellt sein.

Hierbei ist nochmals anzumerken, dass nicht zwingend auf beiden Seiten eine Wasserzufuhr erforderlich ist. Je nach Auslegung des Gesamtprozesses und der Art der Membran kann es hinreichend sein, auf der Anodenseite oder auf der Kathodenseite einen Wassereinlass vorzusehen.

Auch wenn vorteilhaft ein Wassereinlass an der Anodenkammer und ein Wassereinlass an der Kathodenkammer vorhanden ist, so ist es weiterhin nicht zwingend, eine getrennte Wasserzufuhr vorzusehen. Wenn der Druck in der Anodenkammer und der Kathodenkammer identisch ist und die Reinheit des zugeführten Wassers gewährleistet ist, so ist eine einzelne Wasserkammer unterhalb des Anodenkammer und der Kathodenkammer hinreichend, wobei an der einzelnen Wasserkammer folglich beide Wassereinlässe angeschlossen sind.

Eine vorteilhafte Stapelung von zumindest zwei Elektrolysezellen zur Bildung einer Elektrolyseeinheit wird ermöglicht, wenn die Sauerstoffkammer und die Wasserstoffkammer sowohl auf der Anodenseite als auch auf der Kathodenseite offen sind. Bei einer Stapelung zweier Elektrolysezellen aufeinander ist es dabei möglich, eine gemeinsame Sauerstoffkammer sowie eine gemeinsame Wasserstoffkammer zu bilden.

Dazu ist es weiterhin vorteilhaft, wenn die Sauerstoffkammer und die Wasserstoffkammer voneinander durch eine von der Anodenseite zur Kathodenseite verlaufenden Gastrennwand getrennt sind.

Eine vorteilhafte Wasserzufuhr wird ermöglicht, wenn die Anoden-Wasserkammer - sofern vorhanden - und die Kathoden-Wasserkammer - sofern vorhanden - auf der Anodenseite und auf der Kathodenseite offen sind. Somit wird beim Stapeln von Elektrolysezellen ein durchgehender Wasserkanal geschaffen, so dass eine einfache Wasserzufuhr ermöglicht wird.

Dabei ist es weiterhin vorteilhaft, wenn die Anoden-Wasserkammer und die Kathoden-Wasserkammer durch eine von der Anodenseite zur Kathodenseite verlaufenden Wassertrennwand getrennt sind.

Eine vorteilhafte Bildung der Elektrolysezelle sowie mitunter hinreichend in der Verwendung der Elektrolysezelle wird erreicht, wenn die Anodenkammer auf der Anodenseite offen ist. Alternativ oder gleichfalls kann vorteilhaft vorgesehen sein, dass die Kathodenkammer der Elektrolysezelle auf der Kathodenseite offen ist. Dieses vereinfacht den Herstellungsprozess, wobei naheliegend bei Bildung der Elektrolyseeinheit ein Verschließen der Anodenkammer respektive der Kathodenkammer notwendig ist.

Zur Ermöglichung einer vorteilhaften Stapelung von zwei oder mehr Elektrolysezellen aufeinander ist es demgegenüber besonders vorteilhaft, wenn die Anodenkammer durch einen Anodendeckel oder die Kathodenkammer durch einen Kathodendeckel verschlossen ist. Dabei ist der Anodendeckel respektive der Kathodendeckel am Gehäuse dichtend befestigt. Beispielsweise kann vorgesehen sein, dass der Anodendeckel respektive der Kathodendeckel am Gehäuse angeschweißt ist. Sofern der Anodendeckel oder der Kathodendeckel vorhanden ist, ist bei einer Stapelung bereits eine Trennung eine Anodenkammer von einer benachbarten Kathodenkammer gewährleistet. Dennoch kann vorgesehen sein, dass sowohl ein Anodendeckel als auch ein Kathodendeckel vorhanden ist.

Zur elektrischen Kontaktierung der Anode sowie der Kathode wird in einer besonders vorteilhaften Ausführung die Anode respektive die Kathode wasserdurchlässig, beispielsweise in Form eines Gitters oder porös oder gefaltet, elektrisch leitend bis zur Anodenseite respektive zur Kathodenseite geführt. Demgegenüber kann auch vorgesehen sein, ein leitendes Verbindungselement zwischen der Anode und dem Ende der Anodenkammer auf der Anodenseite respektive der Kathode und dem Ende der Kathodenkammer auf der Kathodenseite vorzusehen.

Im Falle eines Anodendeckels respektive eines Kathodendeckels wird dieser in bevorzugter Ausführung zumindest abschnittsweise leitend ausgeführt. Insofern ist eine elektrisch leitende Verbindung von der Anode zum Anodendeckel respektive von der Kathode zum Kathodendeckel erforderlich.

Durch die neue erfindungsgemäße Elektrolysezelle wird die Bildung einer erfindungsgemäßen Elektrolyseeinheit ermöglicht. Hierbei weist die Elektrolyseeinheit eine Mehrzahl benachbart zueinander angeordneter Elektrolysezellen wie zuvor beschrieben auf.

Weiterhin ist es besonders vorteilhaft, wenn die einzelnen Elektrolysezellen dabei gegeneinander abgedichtet sind. Dieses kann durch eine Verschweißung, durch Dichtungen oder beispielsweise eine Verklebung bewirkt werden. Einerseits gilt es, einen Austritt von Wasser oder Wasserstoff oder Sauerstoff aus der Elektrolyseeinheit zu verhindern. Anderseits sollte aber auch sichergestellt werden, dass kein Übertritt von Wasser oder Gasen von einer Anodenkammer einer Elektrolysezelle in eine Kathodenkammer einer benachbarten Elektrolysezelle bzw. umgekehrt erfolgt.

Dabei ist es vorteilhaft, wenn zum Verschließen der vorhandenen Kammern bei einer ersten Elektrolysezelle auf der Anodenseite und bei einer letzten Elektrolysezelle auf der Kathodenseite jeweils ein Abschlussdeckel angeordnet ist.

Zur Zufuhr des Wassers zu den Elektrolysezellen sowie zur Abfuhr der gebildeten Gase und des umströmenden Wassers sind entsprechende Anschlüsse an der Elektrolyseeinheit erforderlich. Hierbei ist es vorteilhaft, wenn an zumindest einem Abschlussdeckel auf einer Seite besonders vorteilhaft an beiden Abschlussdeckeln auf beiden Seiten entsprechende Anschlüsse vorhanden sind. Auch kann vorgesehen sein, dass für den einen Fluidstrom nur an einem ersten Abschlussdeckel auf der Anodenseite der ersten Elektrolysezelle oder an einem zweiten Abschlussdeckel auf der Kathodenseite der letzten Elektrolysezelle ein Anschluss und für einen anderen Fluidstrom auf beiden Seiten ein Anschluss vorhanden ist.

Entsprechend ist es vorteilhaft, wenn der erste Abschlussdeckel und/oder der zweite Abschlussdeckel einen Sauerstoffanschluss aufweist, welcher eine Ableitung des Sauerstoffes aus den Sauerstoffkammern ermöglicht.

Analog ist es vorteilhaft, wenn der erste Abschlussdeckel und/oder der zweite Abschlussdeckel einen Wasserstoffanschluss aufweist, welcher eine Ableitung des Wasserstoffes aus den Wasserstoffkammern ermöglicht.

Weiterhin ist es vorteilhaft, wenn der erste Abschlussdeckel und/oder der zweite Abschlussdeckel einen Wasseranschluss zur Sauerstoffkammer aufweist, welcher eine Ableitung des Wassers der Sauerstoffkammer ermöglicht.

Analog ist es vorteilhaft, wenn der erste Abschlussdeckel und/oder der zweite Abschlussdeckel einen Wasseranschluss zur Wasserstoffkammer aufweist, welcher eine Ableitung des Wassers der Wasserstoff, ermöglicht.

Um eine Zufuhr des Wassers zur Anodenkammer zu ermöglichen, weist vorteilhaft der erste Abschlussdeckel und/oder der zweite Abschlussdeckel einen Wasseranschluss zur Anoden-Wasserkammer auf.

Analog wird eine Zufuhr des Wassers zur Kathodenkammer ermöglicht, wenn vorteilhaft der erste Abschlussdeckel und/oder der zweite Abschlussdeckel einen Wasseranschluss zur Kathodenkammer-Wasserkammer aufweist.

Die Herstellungskosten können positiv beeinflusst werden, wenn vorteilhaft der erste Abschlussdeckel zur Verwendung auf der Anodenseite der ersten Elektrolysezelle und der zweite Abschlussdeckel zur Verwendung auf der Kathodenseite der zweiten Elektrolysezelle als Gleichteile ausgeführt werden.

Weiterhin ist eine vorteilhafte Verschaltung gegeben, wenn die Elektrolysezellen mit der jeweiligen Anode und Kathode in Reihe geschaltet sind.

In den nachfolgenden Figuren wird beispielhaft eine erfindungsgemäße Elektrolysezelle sowie eine erfindungsgemäße Elektrolyseeinheit skizziert. Es zeigen:
- Fig. 1: einen Längsschnitt durch ein Ausführungsbeispiel einer Elektrolysezelle;
- Fig. 2: einen Querschnitt durch die Elektrolysezelle aus Fig. 1;
- Fig. 3: ein Längsschnitt durch eine beispielhafte Elektrolyseeinheit.

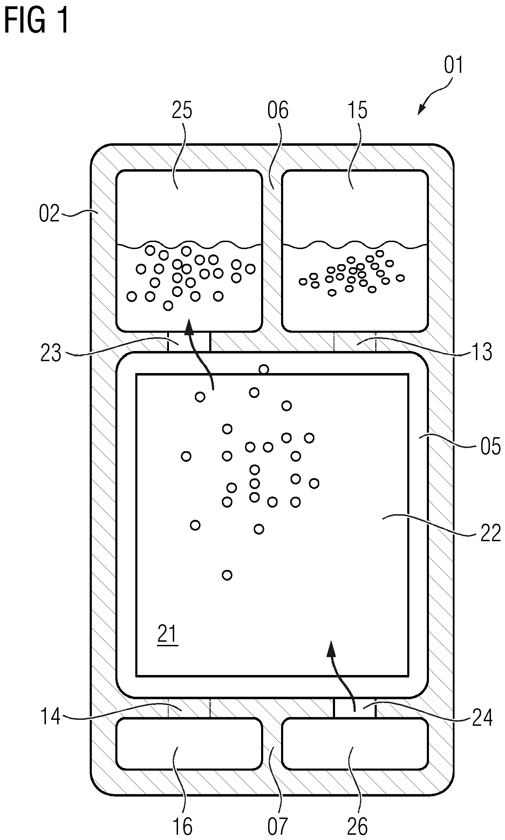

In der Fig. 1 wird ein Ausführungsbeispiel einer erfindungsgemäßen Elektrolysezelle 01 in einem Längsschnitt durch die Kathodenkammer 21 skizziert.

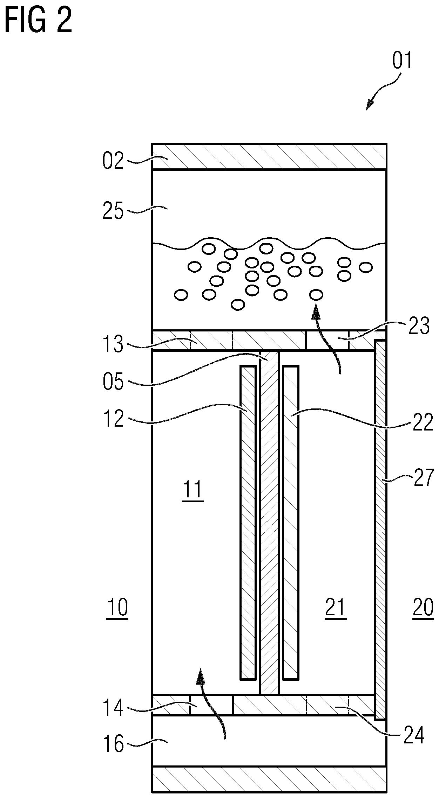

Hierzu zeigt die **Fig.** 2 die Elektrolysezelle 01 aus **Fig.** 1 in einem Querschnitt durch die Wasserstoffkammer 25 sowie die Anoden-Wasserkammer 16.

Zu erkennen ist zunächst einmal der Aufbau der Elektrolysezelle 01 mit einem einstückigen Gehäuse **02.** Dieses 02 ist unterteilt in mehrere Kammern, wobei wesentlich für die Funktion zur Wasserelektrolyse das Vorhandensein einer Anodenkammer 11 auf der Anodenseite 10 und der Kathodenkammer 21 auf der Kathodenseite 20 **ist.** Die Anodenkammer 11 ist dabei von der Kathodenkammer 21 durch eine Membran 05 getrennt. Dabei kann es sich um eine sogenannte PEM (Polymer-Elektrolyt-Membran) handeln, welche dem Fachmann hinlänglich bekannt ist. Weiterhin für die Funktion erforderlich ist die Anordnung einer Anode 12 in der Anodenkammer 11 sowie einer Kathode 22 in der Kathodenkammer 21. Naheliegend ist auch eine elektrische Verbindung erforderlich, auf die hier nicht weiter eingegangen werden soll und insofern auf dem Fachmann hinlänglich bekannte Ausführungen verwiesen wird.

Um den Prozess zu ermöglichen ist weiterhin eine Wasserzufuhr von der Unterseite erforderlich. Hierzu ist im Gehäuse 02 an der Unterseite der Anodenkammer 11 ein Wassereinlass 14 vorhanden, welcher 14 eine Verbindung von einer unterseitigen Anoden-Wasserkammer 16 bereitstellt. Gegenüberliegend der Membran 05 ist gleichfalls an der Unterseite der Kathodenkammer 21 im Gehäuse 02 ein Wassereinlass 24 vorhanden. Dieser 24 bildet die Verbindung zur unterseitig angeordneten Kathoden-Wasserkammer 26. Die Anoden-Wasserkammer 16 ist dabei von der benachbart angeordneten Kathoden-Wasserkammer 26 durch eine Wassertrennwand 07 des Gehäuses 02 getrennt. Die Anoden-Wasserkammer 16 und die Kathoden-Wasserkammer 26 sowie die Wassertrennwand 07 erstrecken sich hierbei von der Anodenseite 10 bis zur Kathodenseite 20. Folglich sind die Anoden-Wasserkammer 16 und die Kathoden-Wasserkammer 26 beidseitig offen ausgeführt.

Zur Ableitung des im Prozess der Elektrolyse entstehenden Gases sowie zur Ableitung des umzuwälzenden Wassers ist an der Oberseite der Anodenkammer 11 im Gehäuse 02 ein Sauerstoffauslass 13 vorhanden. Gegenüberliegend weist das Gehäuse 02 oberhalb der Kathodenkammer 21 ein Wasserstoffauslass 23 auf.

Relevant für die erfindungsgemäße Ausführung der Elektrolysezelle 01 ist das Vorhandensein einer Sauerstoffkammer 15 im Gehäuse 02 oberhalb des Sauerstoffauslasses 13 sowie das Vorhandensein einer Wasserstoffkammer 25 im Gehäuse 02 oberhalb des Wasserstoffauslasses 23. Im Prozess der Elektrolyse ist die Sauerstoffkammer 15 teilweise mit dem gebildeten Sauerstoff sowie mit Wasser gefüllt. Analog befindet sich in der Wasserstoffkammer 25 Wasserstoff und Wasser. Um nunmehr eine Trennung des Sauerstoffs vom Wasser in der Sauerstoffkammer 15 und analog eine Trennung des Wasserstoffs vom Wasser in der Wasserstoffkammer 25 zu ermöglichen, ist das Volumen der Sauerstoffkammer und das Volumen der Wasserstoffkammer hinreichend groß zu wählen. In diesem Ausführungsbeispiel ist vorgesehen, dass das Volumen der Sauerstoffkammer ungefähr dem 0,25-fachen Volumen der Anodenkammer 11 entspricht. Gleiches gilt in diesem Ausführungsbeispiel für das Volumen der Wasserstoffkammer mit ungefähr dem 0,25-fachen Volumen der Kathodenkammer 21.

Den Darstellungen in Fig. 1 und Fig. 2 weiterhin zu entnehmen ist die vorteilhafte Anordnung der Sauerstoffkammer 15 benachbart zur Wasserstoffkammer 25. Diese 15 und 25 werden durch eine Gastrennwand 06 voneinander getrennt. Entsprechend erstreckt sich die Sauerstoffkammer 15 und die Wasserstoffkammer 25 sowie die Gastrennwand 06 von der Anodenseite 10 bis zur Kathodenseite 20. Dabei sind die Sauerstoffkammer 15 und die Wasserstoffkammer 25 beidseitig offen ausgeführt.

Weiterhin zu erkennen ist die Anordnung eines Kathodendeckels 27 auf der Kathodenseite 20 der Kathodenkammer 21. Vorgesehen ist dabei, dass der Kathodendeckel 27 mit dem Gehäuse 02 verschweißt oder anderweitig dicht verschlossen wird. Hierdurch wird bei einer Stapelung von Elektrolysezellen 01 eine Trennung von jeweils benachbarten Anodenkammer 11 und Kathodenkammer 21 bewirkt.

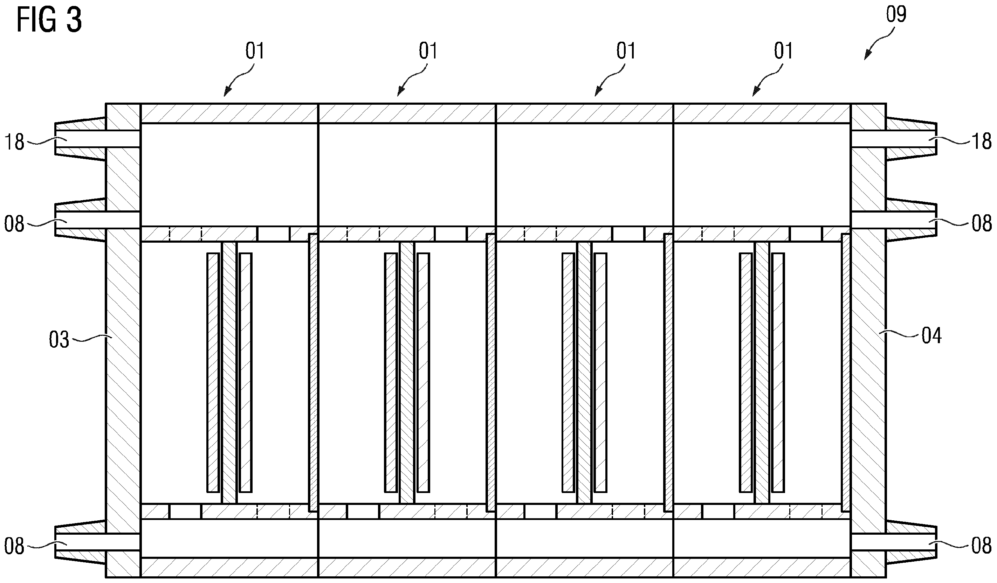

In der Fig. 3 ist nunmehr ein exemplarisches Ausführungsbeispiel für eine Elektrolyseeinheit 09 schematisch dargestellt. Zu erkennen ist die gestapelte Anordnung mehrerer Elektrolysezellen 01. Diese 01 sind dabei gegeneinander abgedichtet. Dieses kann beispielsweise durch eine Verschweißung oder durch Dichtungen bewirkt werden.

Auf der Anodenseite 10 einer ersten Elektrolysezelle 01 ist ein erster Abschlussdeckel 03 und gegenüberliegend auf der Kathodenseite 20 einer letzten Elektrolysezelle 01 ist ein zweiter Abschlussdeckel 04 angeordnet. Hierdurch werden die einzelnen Kammern, d.h. die Sauerstoffkammer 15, die Anoden-Wasserkammer 16, die Wasserstoffkammer 25 und die Kathoden-Wasserkammer 26 verschlossen.

Zur Zufuhr und Abfuhr des Wassers weisen die Abschlussdeckel 03, 04 jeweils mehrere Wasseranschlüsse 08 auf. Weiterhin befindet sich versetzt zueinander am oberen Ende der Abschlussdeckel 03, 04 jeweils ein Sauerstoffanschluss 18 und ein Wasserstoffanschluss 28. Wenngleich nicht korrekt dargestellt, so führt naheliegend der Sauerstoffanschluss 18 zur Sauerstoffkammer 15 und der Wasserstoffanschluss 28 zur Wasserstoffkammer 25. Die Auslegung der Anschlüsse erfolgt naheliegend entsprechend des jeweils geführten Mediums sowie des Volumenstroms.

## Patentansprüche

1. Elektrolysezelle (01) als bestimmungsgemäßer Bestandteil einer Elektrolyseeinheit (09) zum elektrochemischen Zerlegen von Wasser (H2O) zu Wasserstoff und Sauerstoff mit einer Anodenseite (10) und einer Kathodenseite (20) umfassend ein Gehäuse (02) in dem eine Anodenkammer (11) mit einer Anode (12) und gegenüberliegend eine Kathodenkammer (21) mit einer Kathode (22) und dazwischen eine Membran (05) angeordnet ist, wobei bestimmungsgemäß zwischen der Anode (12) und der Kathode (22) eine Spannung angelegt werden kann, wobei an der Oberseite der Anodenkammer (11) ein Sauerstoffauslass (13) und an der Oberseite der Kathodenkammer (21) ein Wasserstoffauslass (23) und an der Unterseite der Anodenkammer (11) und/oder an der Unterseite des Kathodenkammer (21) ein Wassereinlass (14, 24) angeordnet ist, wobei in dem Gehäuse (02) weiterhin oberhalb des Sauerstoffauslasses (13) eine Sauerstoffkammer (15) mit zumindest dem 0,15-fachen Volumen der Anodenkammer (11) und oberhalb des Wasserstoffauslasses (23) eine Wasserstoffkammer (25) mit zumindest dem 0,15-fachen Volumen der Kathodenkammer (21) angeordnet ist,
**dadurch gekennzeichnet,**
**dass** im Gehäuse (02) an der Unterseite des Anodenseitigem Wassereinlasses (14) eine Anoden-Wasserkammer (16) mit zumindest dem 0,05-fachen Volumen der Anodenkammer (11) und an der Unterseite des Kathodenseitigem Wassereinlasses (24) eine Kathoden-Wasserkammer (26) mit zumindest dem 0,05-fachen Volumen der Kathodenkammer (11) angeordnet ist.

2. Elektrolysezelle (01) nach Anspruch 1,
wobei das Gehäuse (02) einstückig ausgeführt ist.

3. Elektrolysezelle (01) nach Anspruch 1 oder 2,
wobei das Gehäuse (02) aus einem Kunststoffmaterial hergestellt ist.

4. Elektrolysezelle (01) nach einer der Ansprüche 1 bis 3, wobei die Sauerstoffkammer (15) und die Wasserstoffkammer (25) auf der Anodenseite (10) und auf der Kathodenseite (20) offen sind.

5. Elektrolysezelle (01) nach einer der Ansprüche 1 bis 4, wobei die Anoden-Wasserkammer (16) und/oder die Kathoden-Wasserkammer (26) auf der Anodenseite (10) und auf der Kathodenseite (20) offen sind.

6. Elektrolysezelle (01) nach einer der Ansprüche 1 bis 5, wobei die Anodenkammer (11) auf der Anodenseite (10) und/oder die Kathodenkammer (21) auf der Kathodenseite (20) offen ist; und/oder
wobei die Anodenkammer (11) auf der Anodenseite (10) durch ein am Gehäuse befestigten Anodendeckel und/oder
wobei die Kathodenkammer (21) auf der Kathodenseite (20) durch ein am Gehäuse befestigten Kathodendeckel (27) verschlossen ist.

7. Elektrolyseeinheit (09) zum elektrochemischen Zerlegen von Wasser (H2O) zu Wasserstoff und Sauerstoff umfassend eine Mehrzahl jeweils benachbart zueinander angeordneter Elektrolysezellen (01) jeweils nach einer der vorhergehenden Ansprüche.

8. Elektrolyseeinheit (09) nach Anspruch 7,
wobei auf der Anodenseite (10) einer ersten Elektrolysezelle (01) ein erster Abschlussdeckel (03) und auf der Kathodenseite (20) einer letzten Elektrolysezelle (01) ein zweiter Abschlussdeckel (04) angeordnet ist,
wobei der erste Abschlussdeckel (03) und der zweite Abschlussdeckel (04) die Sauerstoffkammer (15) und die Wasserstoffkammer (25) und die vorhandenen Wasserkammern (16, 26) verschließen.

9. Elektrolyseeinheit (09) nach Anspruch 8,
wobei der erste Abschlussdeckel (03) und/oder der zweite Abschlussdeckel (04)
- einen Sauerstoffanschluss (18) zur Sauerstoffkammer (15) und/oder
- einen Wasserstoffanschluss (28) zur Wasserstoffkammer (25) und/oder
- einen Wasseranschluss (08) einer Kammer (15, 16, 25, 26) oder mehrere Wasseranschlüsse (08) zu mehreren Kammern (15, 16, 25, 26) bereitstellt.

10. Elektrolyseeinheit (09) nach Anspruch 8 oder 9,
wobei der erste Abschlussdeckel (03) und der zweite Abschlussdeckel (04) als Gleichteile ausgeführt sind.

11. Elektrolyseeinheit (09) nach einer der Ansprüche 7 bis 10,
wobei die Elektrolysezellen (01) elektrisch in Reihe geschaltet sind.

## Claims

1. Electrolysis cell (01) as an as-intended component of an electrolysis unit (09) for the electrochemical decomposition of water (H2O) into hydrogen and oxygen, having an anode side (10) and a cathode side (20) and comprising a housing (02), arranged in which are an anode chamber (11) with an anode (12) and, lying opposite, a cathode chamber (21) with a cathode (22) and, in between, a membrane (05), wherein a voltage can be applied as intended between the anode (12) and the cathode (22), wherein arranged on the upper side of the anode chamber (11) is an oxygen outlet (13) and on the upper side of the cathode chamber (21) a hydrogen outlet (23) and on the underside of the anode chamber (11) and/or on the underside of the cathode chamber (21) a water inlet (14, 24), wherein also arranged in the housing (02) above the oxygen outlet (13) is an oxygen chamber (15) having at least 0.15 times the volume of the anode chamber (11) and above the hydrogen outlet (23) a hydrogen chamber (25) having at least 0.15 times the volume of the cathode chamber (21), **characterized**
**in that** arranged in the housing (02) on the underside of the anode-side water inlet (14) is an anode water chamber (16) having at least 0.05 times the volume of the anode chamber (11) and on the underside of the cathode-side water inlet (24) a cathode water chamber (26) having at least 0.05 times the volume of the cathode chamber (11).

2. Electrolysis cell (01) according to Claim 1,
wherein the housing (02) is made in one piece.

3. Electrolysis cell (01) according to Claim 1 or 2,
wherein the housing (02) is produced from a plastics material.

4. Electrolysis cell (01) according to one of Claims 1 to 3, wherein the oxygen chamber (15) and the hydrogen chamber (25) are open on the anode side (10) and on the cathode side (20).

5. Electrolysis cell (01) according to one of Claims 1 to 4, wherein the anode water chamber (16) and/or the cathode water chamber (26) are open on the anode side (10) and on the cathode side (20).

6. Electrolysis cell (01) according to one of Claims 1 to 5,
wherein the anode chamber (11) is open on the anode side (10) and/or the cathode chamber (21) is open on the cathode side (20); and/or
wherein the anode chamber (11) is closed on the anode side (10) by an anode cover attached to the housing and/or
wherein the cathode chamber (21) is closed on the cathode side (20) by a cathode cover (27) attached to the housing.

7. Electrolysis unit (09) for the electrochemical decomposition of water (H2O) into hydrogen and oxygen comprising a plurality of electrolysis cells (01) respectively arranged adjacent to one another and respectively according to one of the preceding claims.

8. Electrolysis unit (09) according to Claim 7,
wherein arranged on the anode side (10) of a first electrolysis cell (01) is a first end cover (03) and on the cathode side (20) of a last electrolysis cell (01) a second end cover (04),
wherein the first end cover (03) and the second end cover (04) close the oxygen chamber (15) and the hydrogen chamber (25) and the existing water chambers (16, 26).

9. Electrolysis unit (09) according to Claim 8,
wherein the first end cover (03) and/or the second end cover (04) provide(s)
- an oxygen connection (18) to the oxygen chamber (15) and/or
- a hydrogen connection (28) to the hydrogen chamber (25) and/or
- a water connection (08) to a chamber (15, 16, 25, 26) or a number of water connections (08) to a number of chambers (15, 16, 25, 26).

10. Electrolysis unit (09) according to Claim 8 or 9,
wherein the first end cover (03) and the second end cover (04) are made as identical parts.

11. Electrolysis unit (09) according to one of Claims 7 to 10, wherein the electrolysis cells (01) are electrically connected in series.

## Revendications

1. Cellule (01) d'électrolyse comme partie constitutive conforme aux prescriptions d'une unité (09) d'électrolyse pour la décomposition électrochimique de l'eau (H2O) en hydrogène et en oxygène ayant un côté (10) anodique et un côté (20) cathodique comprenant une enveloppe (02), dans laquelle est disposée une chambre (11) anodique ayant une anode (12) et, en face, une chambre (21) cathodique ayant une cathode (22) et, entre elles, une membrane (05), dans laquelle, conformément aux prescriptions, une tension peut être appliquée entre l'anode (12) et la cathode (22), dans laquelle, du côté supérieur de la chambre (11) anodique est disposée une sortie (13) pour l'oxygène et, du côté supérieur de la chambre (21) cathodique, une sortie (23) pour l'hydrogène et, du côté inférieur de la chambre (11) anodique et/ou du côté inférieur de la chambre (21) cathodique, une entrée (14, 24) pour l'eau, dans laquelle, dans l'enveloppe (02), est disposée en outre, au-dessus de la sortie (13) pour l'oxygène, une chambre (15) pour l'oxygène ayant un volume représentant au moins 0,15 fois le volume de la chambre (11) anodique et, au-dessus de la sortie (23) pour l'hydrogène, une chambre (25) pour l'hydrogène ayant un volume représentant au moins 0,15 fois le volume de la chambre (21) cathodique,
**caractérisée**
**en ce que**, dans l'enveloppe (02) du côté inférieur de l'entrée (14) pour l'eau du côté anodique, est disposée une chambre (16) pour de l'eau du côté anodique ayant un volume représentant au moins 0,05 fois le volume de la chambre (11) anodique et, du côté inférieur de l'entrée (24) pour de l'eau du côté cathodique, est disposée une chambre (26) pour de l'eau cathodique ayant un volume représentant au moins 0,05 fois le volume de la chambre (11) cathodique.

2. Cellule (01) d'électrolyse suivant la revendication 1, dans laquelle l'enveloppe (02) est réalisée en une seule pièce.

3. Cellule (01) d'électrolyse suivant la revendication 1 ou 2, dans laquelle l'enveloppe (02) est en une matière plastique.

4. Cellule (01) d'électrolyse suivant l'une des revendications 1 à 3,
dans laquelle la chambre (15) pour l'oxygène et la chambre (25) pour l'hydrogène sont ouvertes du côté (10) anodique et du côté (20) cathodique.

5. Cellule (01) d'électrolyse suivant l'une des revendications 1 à 4,
dans laquelle la chambre (16) pour de l'eau anodique et/ou la chambre (26) pour de l'eau cathodique sont ouvertes du côté (10) anodique et du côté (20) cathodique.

6. Cellule (01) d'électrolyse suivant l'une des revendications 1 à 5,
dans laquelle la chambre (11) anodique est ouverte du côté (10) anodique et/ou la chambre (21) cathodique est ouverte du côté (20) cathodique ; et/ou
dans laquelle la chambre (11) anodique est fermée du côté (10) anodique par un couvercle anodique fixé à l'enveloppe et/ou dans laquelle la chambre (21) cathodique est fermée du côté (20) cathodique par un couvercle (27) cathodique fixé à l'enveloppe.

7. Unité (09) d'électrolyse pour la décomposition électrochimique de l'eau (H20) en hydrogène et en oxygène comprenant une pluralité de cellules (01) d'électrolyse disposées en étant voisines les unes des autres respectivement suivant l'une des revendications précédentes.

8. Unité (09) d'électrolyse suivant la revendication 7,
dans laquelle, du côté (10) anodique d'une première cellule (01) d'électrolyse est disposé un premier couvercle (03) de fermeture et, du côté (20) cathodique d'une dernière cellule (01) d'électrolyse, est disposé un deuxième couvercle (04) de fermeture, dans laquelle le premier couvercle (03) de fermeture et le deuxième couvercle (04) de fermeture ferment la chambre (15) pour l'oxygène et la chambre (25) pour l'hydrogène et les chambres (16, 26) pour l'eau, qui sont présentes.

9. Unité (09) d'électrolyse suivant la revendication 8,
dans laquelle le premier couvercle (03) de fermeture et/ou le deuxième couvercle (04) de fermeture dispose :
- d'un raccord (18) pour l'oxygène à la chambre (15) pour l'oxygène et/ou
- d'un raccord (28) pour l'hydrogène à la chambre (25) pour de l'hydrogène et/ou
- d'un raccord (08) pour l'eau à une chambre (15, 16, 25, 26) ou plusieurs raccords (08) pour l'eau à plusieurs chambres (15, 16, 25, 26).

10. Unité (09) d'électrolyse suivant la revendication 8 ou 9, dans laquelle le premier couvercle (03) de fermeture et le deuxième couvercle (04) de fermeture sont réalisés sous la forme de pièces pareilles.

11. Unité (09) d'électrolyse suivant l'une des revendications 7 à 10,
dans laquelle les cellules (01) d'électrolyse sont montées électriquement en série.
